# EUROPEAN PATENT APPLICATION

(11) **EP 4 592 981 A1**
(43) Date of publication of application: **30.07.2025**
(21) Application number: 24154192.9
(22) Date of filing: 26.01.2024
(51) Int. Cl.: G08B 17/00, G08B 17/12, G06N 3/08

(54) **SYSTEMS AND METHODS FOR FOREST FIRE PREDICTION AND DETECTION OF FIRE OUTBREAKS**

(71) Applicant: Urban Software Institute GmbH, 09116 Chemnitz (DE)
(72) Inventor: Heuser, Tobias, 76646 Bruchsal (DE)
(74) Representative: Bittner, Peter

(57) **Abstract**

Complementary systems (100, 200), methods and computer programs product are disclosed for detecting an outbreak of fire in a forest-like-area. A first system (100) has a machine learning model (111) trained - based on satellite images - to predict geographic risk areas (RA1, RA2) with a forest fire risk. The predicted risk areas to be used as part of navigation instructions (10) for one or more autonomous arial vehicles (30) to observe such risk areas. The output of the machine learning model (111) is obtained by the second system (200) which is an onboard system of an autonomous arial vehicle (30) and used by a flight navigation component (210) to navigate the vehicle to and within the airspace above one of the predicted risk areas where the vehicle captures images. The second system has an onboard machine learning model (230) trained to identify real-life artefacts fire and/or smoke in the captured images. In case a predicted fire-smoke indicator (FSI) indicates the presence of fire and/or smoke artefacts, additional navigation instructions (11) are generated for the autonomous aerial vehicle (30) to approach the airspace above the location of origin of the detected fire and/or smoke artefacts to verify whether the fire and/or smoke artefacts are caused by an outbreak of fire.

## Description

### Technical Field

The present invention generally relates to prediction and detection of fire outbreaks in forest-like-areas, and more particularly relates to systems and methods for predicting geographic risk areas with a forest fire risk to be used as part of navigation instructions for one or more autonomous arial vehicles to observe such risk areas, and systems and methods for controlling an autonomous aerial vehicle to detect an outbreak of fire in a forest-like-area using such navigation instructions.

### Background

Wildfires can have a major impact on communities, causing property damage, loss of life, and long-term environmental damage. They can also result in significant economic losses for businesses and individuals. Therefore, it is essential to have effective measures in place to prevent and mitigate the impact of wildfires.

PCT application WO2017137393A1 discloses a fire detection system using a fire sensor and optionally a smoke sensor mounted on a drone wherein a drone controller is configured to direct the flight of the drone on a flight path within a building and to send fire alert data to the system controller upon sensing of a fire condition by said sensor.

PCT application WO2021174291A1 discloses an emergency response system having one or more drones with suitable sensors located thereon to ascertain whether a potential fire is an actual fire that needs suppressing or is not a fire. Also disclosed is a system of satellites that provide broad area initial detection of potential fire ignitions using a combination of visual and infrared sensors. Said satellites are structured to identify unique and defining characteristics of a fire ignition, including but not limited to the correlation to points of lightning strikes, the existence of particular heat or infrared signatures, the existence of particular smoke or air disturbances and other factors, either sensed through direct causal observation or identified through artificial intelligence deep neural nets that have been trained on prior large data sets.

The above prior art systems for wild fire detection rely on image data showing fire indicators to trigger respective fire-fighting actions which are analyzed by human analysts. This may result in situations where a fire may be detected late or not at all so that the fire may already be wide-spread before such actions are initiated.

### Summary

It is therefore a challenge to provide methods and systems for faster and reliable detection of forest fires. This technical problem is solved by the methods, computer program products and systems as claimed by the independent claims. It is to be noted that the two independent claims in each claim category are interrelated products/methods in that the output of one of the products/methods is used as input by the other product/method.

The herein disclosed solution to the above problem uses artificial intelligence (Al), satellite data, unmanned autonomous aerial vehicle data, and decision support systems to identify and predict potential wildfire (forest fire) risks and take timely action to prevent or mitigate their impact. The solution allows for real-time monitoring and assessment of potential wildfire threats. Autonomous aerial vehicles (AAV) are controlled such that they monitor forest-like risk areas for potential outbreaks of fire to enable timely and efficient firefighting in fire emergency cases. The solution includes at least a first computer system and a second computer system. The first computer system is adapted to training a machine learning model to predict geographic risk areas with a forest fire risk. The predicted risk areas are used as part of navigation instructions for one or more autonomous arial vehicles to observe such risk areas. The second computer system is adapted to control an autonomous aerial vehicle to detect an outbreak of fire in a forest-like-area. Thereby, the second computer system uses the control instructions generated by the first computer system for autonomous flight navigation. Further embodiments of the herein disclosed approach are first and second computer-implemented methods which are executed by the first and second computer systems for the respective purpose, as well as first and second computer program products which include computer-readable instructions that, when executed by the respective computer system, cause one or more processors of the respective system to perform the respective computer-implemented method.

In one embodiment, computer-implemented method is provided for training a machine learning model to predict geographic risk areas with a forest fire risk. The predicted risk areas to be used as part of navigation instructions for one or more autonomous arial vehicles to observe such risk areas. The method starts with receiving a set of satellite training images. The training images include thermal images and/or RGB images and/or multispectral images associated with one or more observance areas. The training images are captured as time series over a time interval covering at least time periods where the one or more observance areas were exposed to temperatures above a predefined temperature threshold. Such temperature data for respective areas is typically available from weather service providers. The time interval can even include a time span of up to multiple years. In a time series for a particular observance area, images may be captured once a day, once a week or even once a month. The frequency at which the training images are taken may depend on the speed at which the climate conditions (or other parameters like vegetation, human built infrastructure, etc.) change during the time interval. The faster the change the higher the capturing frequency.

Further criteria for further parameters may be used for the selection (filtering) of training images. For example, if the distance of forest-like areas to human built (e.g., civilian or military) infrastructure like streets, neighborhoods, barbecue areas or military training grounds is below a predefined distance threshold, there is an increased risk that humans may enter the forest-like areas and cause the outbreak of a wild fire. For example, throwing away of a burning cigarette butt or a glass bottle may trigger ignition of the forest floor. Such distance data can be retrieved from map services (e.g., Google Maps).

Another critical parameter for the risk of a fire outbreak is the fuel load in the forest-like area. Fuel load is defined as accumulated combustible biomass in a defined space and comprises for example deadwood and/or needles from coniferous trees. If the fuel load is above a predefined fuel load threshold, the risk for a fire outbreak increases because forest fire typically spreads of the ground. If there is not enough fuel load, an ignition may likely come to stop again. However, in case of sufficient fuel load, the fire can spread quickly. Fuel load data can be available from maps, publication of respective field research or expert opinions which sometimes exist within the local administration.

Another critical parameter is the vulnerable type of vegetation. Different tree types show different resilience against fire. For example, coniferous trees have lower resilience than deciduous trees. If the vulnerability of the vegetation is above a predefined vulnerability threshold, the risk of fire outbreak is increased.

Another critical parameter is the humidity being below a predefined humidity threshold. Of course, areas with low humidity face a higher risk of fire outbreak than areas with high humidity.

Another critical parameter is the soil permeability in a forest-like area. The more permeable the soil is, the less moisture in the soil (e.g. sandy soil). If the permeability exceeds as predefined permeability threshold, the risk of fire outbreak increases - in particular when other risk conditions such as high temperature prevail simultaneously.

Another critical parameter is the topology of the terrain in the forest-like area. The steeper the terrain in the forest-like area, the faster the spreading of a fire, under otherwise identical conditions.

As it is relevant that the above conditions were fulfilled at the time the image was captured, each potential training image has a time stamp indicating the capturing time of the image. The above discussed parameters are also associated with a respective time stamp so that the selection of a particular training image depends on the filtering parameters at the time the image was captured.

In an example implementation, potential training images with forest-like-areas have one or more of the following annotations which can be used for filtering the images to obtain a final set of training images:
- a label for the type of wood prevailing in the respective forest-like-area, wherein the type of wood has a defined impact on the respective fire risk value
- a label for soil conditions prevailing in the respective forest-like-area, wherein the soil condition has a defined impact on the respective fire risk value
- a label for fuel load prevailing in the respective forest-like-area, wherein the fuel load has a defined impact on the respective fire risk value
- a label for the health status of trees prevailing in the respective forest-like-area, wherein the health status has a defined impact on the respective fire risk value
- a label for historic weather data prevailing in the respective forest-like-area, wherein the historic weather data has a defined impact on the respective fire risk value
- a label for weather data forecasts prevailing in the respective forest-like-area, wherein the weather data forecasts have a defined impact on the respective fire risk value
- a label for topography conditions prevailing in the respective forest-like-area, wherein the topography condition has a defined impact on the respective fire risk value.

For each training image one or more forest-like-area annotations are received which indicate, in the respective training image, areas which are covered by forest-like vegetation. The annotations can be made by a human user or can be automatically generated by respectively trained image processing algorithms.

Further, for each annotated training image, a fire risk value is received for each forest-like-area. The fire risk value indicates a risk for an outbreak of fire in the respective forest-like-area. The fire risk value for a training image is typically set by a human analyst.

The machine learning model is then trained by using the annotated training images as training inputs to the machine learning model. The respective fire risk values serve as ground truth. The trained system can then predict, for a current input satellite image, one or more forest-like-areas with a fire risk value above a corresponding predefined fire risk threshold as one or more risk areas. The risk areas are then used as part of respective navigation instructions for one or more autonomous aerial vehicles. In other words, the geographic coordinates defining the boundaries of said risk areas are interpreted by a flight navigation system of a respective AAV as boundaries for its respective flight route. That is, the AAV only flies within said boundaries. In other words, the AAV is instructed to fly over such risk areas. Flying over no-risk areas is therefore minimized (only during the flight towards a risk area, from one risk area to another risk area, or back to a home station). While flying over the risk areas, the AAV operates in a fire detection mode, which can be switched of otherwise (energy saving).

In one embodiment, a computer program product is provided comprising computer-readable instructions that, when loaded into the memory of a computing device and processed by one or more processors of the computing device, cause the computing device to execute steps for training a machine learning model in accordance with the herein disclosed geographic risk areas prediction training method to predict geographic risk areas with a forest fire risk. The predicted risk areas are used as part of navigation instructions for one or more autonomous arial vehicles to observe such risk areas.

In one embodiment, a computer system is provided for training a machine learning model to predict geographic risk areas with a forest fire risk, the predicted risk areas to be used as part of navigation instructions for one or more autonomous arial vehicles to observe such risk areas The system has one or more processors for executing computer-readable instructions to instantiate functional modules for performing steps in accordance with the herein disclosed geographic risk areas prediction training method.

In a further embodiment, a second complementary computer-implemented method is provided for controlling an autonomous aerial vehicle to detect an outbreak of fire in a forest-like-area. The second method starts with obtaining an output (prediction) of the machine learning model trained by the first method. The machine learning model output/prediction, based on a current satellite image which includes pixels representing the forest-like-area, is the result of a prediction that the forest-like-area is a risk area with a fire risk value above a predefined fire risk threshold. The output further indicates the boundaries of the risk area in a format (e.g., geo-coordinates) which is readable by a flight navigation component of the autonomous aerial vehicle. For example, the boundaries of the risk area may be specified by a respective polygon. Other geometric shapes (e.g., circle, ellipsoid, etc.) can be used as well defining the boundaries of a risk area.

In case the current position of the autonomous aerial vehicle is within the airspace above the risk area, the flight navigation component ensures that the autonomous aerial vehicle does not leave the risk area. In case the current position of the autonomous aerial vehicle is in an airspace outside the risk area, the flight navigation component computes a flight route for the autonomous aerial vehicle to enter the airspace above the risk area.

While the AAV is flying within the airspace above the risk area, one or more image capturing devices of the AAV capture images of the risk area. The AAV may be equipped with different camera devices (onboard image capturing devices) for capturing thermal images, multispectral images and/or RGB images at, advantageously, a framerate of multiple frames per (fps) second. Such a framerate ensures that a location is available for detection through multiple images at different angles and with multiple visual signals. This increases the robustness of the predictions, as more images and therefore more visual signals are available for the predictions at high fps. Further, the AAV has a storage component (memory) adapted to store the captured images.

The AAV further has an onboard machine learning model, which has been trained to classify clusters of pixels of each stored image into classes representing real-life artefacts fire and/or smoke. Thereby, the onboard machine learning model has been trained with training images of forest-like-areas including training images without such artefacts, training images including fire and/or smoke artefacts, and training images including fire-or-smoke-like -like artefacts. Each training image is labeled with a fire-smoke indicator as ground truth. The fire-smoke indicator characterizes the training image with regard to the presence of fire and/or smoke. The trained onboard machine learning model is adapted to predict a fire-smoke indicator for any of the stored images. In case the fire-smoke indicator indicates the presence of fire and/or smoke artefacts, additional navigation instructions are generated for the flight navigation component of the AAV to approach the airspace above the location of origin of the detected fire and/or smoke artefacts to obtain additional data for verifying whether the fire and/or smoke artefacts are caused by an outbreak of fire. Such additional data can include images which are captured at a shorter distance to said detected artefacts or from further perspectives/directions. Once the prediction values for the fire-smoke indicators derived from the additional data exceed a predefined threshold, the outbreak of fire is confirmed (verified).

In one embodiment, the AAV communicates the location of origin of the detected fire and/or smoke artefacts to one or more further autonomous aerial vehicles with instructions to observe the location of origin from one or more additional perspectives. This allows to form a dynamic network of AAVs which can autonomously collaborate to ensure a maximum coverage with regard to the observation of critical places in said risk area.

In one embodiment, the AAV can communicate the location of origin of the detected fire and/or smoke artefacts to a central aerial vehicle communication platform as a first alert of a potential outbreak of fire when a stored image is classified into a class representing real-life artefacts fire and/or smoke. Once the AAV has been able to verify that the fire and/or smoke artefacts are caused by an outbreak of fire, the AAV can communicate the location of origin of the detected fire and/or smoke artefacts to the central aerial vehicle communication platform as a second alert of a confirmed outbreak of fire.

In one embodiment, a computer program product is provided comprising computer-readable instructions that, when loaded into the memory of a computing device and processed by one or more processors of the computing device, cause the computing device to control an autonomous aerial vehicle to detect an outbreak of fire in a forest-like-area according to herein disclosed complementary computer-implemented method.

In one embodiment, an autonomous aerial vehicle has an (onboard) computer system for controlling the autonomous aerial vehicle to detect an outbreak of fire in a forest-like-area. The computer system uses one or more processors for executing computer-readable instructions to instantiate functional modules for performing the steps of the complementary computer-implemented method.

The herein disclosed approach with the complementary computer-implemented methods, programs and systems can be advantageous in that it addresses:
- Inaccurate or insufficient data: in many geographic regions, there is a lack of accurate and comprehensive data on forest fire risks and their potential impacts. This problem can be addressed by combining the use of satellite data for the identification of risk areas with the use of AAVs and AI algorithms to collect and analyze data on potential forest fire risks, and finally detect an outbreak of fire in such risk areas. This also overcomes the problem of having only limited access to timely and accurate information about the location and impact of forest fires. The herein disclosed approach allows to collect real-time data on the location and spread of fires, automatically analyzing the data on the AAV and sharing it via data transfer to a central data platform while further observing the risk area.
- Inefficient resource allocation: in many prior art systems, there is an inefficiency of resource allocation in responding to and mitigating the impact of forest fires. The herein disclosed approach allows to automatically send AAVs to potential risk areas immediately after these have been identified by providing the risk area coordinates to the AAVs flight navigation component. It may be an advantage that flight time over no-risk areas is minimized. Further, the AAV can immediately raise automated alerts in case of fire detection to respective recipients (e.g., fire brigade services) which can then take timely countermeasures to fight the fire.

Further aspects of the invention will be realized and attained by means of the elements and combinations particularly depicted in the appended claims. It is to be understood that both, the foregoing general description and the following detailed description are exemplary and explanatory only and are not restrictive of the invention as claimed.

### Brief Description of the Drawings

FIG. 1 is a block diagram illustrating a first and a second computer system which are complementarily used for the detection of fire outbreaks according to an embodiment;
FIG. 2 is a flowchart of two cascaded computer-implemented methods which can be complementarily used to detect an outbreak of fire in a forest-like-area according to an embodiment;
FIGs. 3A, 3B illustrate examples of two training images used for training the first computer system according to an embodiment;
FIGs. 4A, 4B illustrate examples of two training images used for training the first computer system after labeling;
FIGs. 5A, 5B show a JSON output example for predictions provided by the first computer system;
FIGs. 6A, 6B shows example messages with drone instructions in JSON format for flight navigation;
FIG. 7A illustrates an example of a transformed image file according to an embodiment;
FIG. 7B illustrates an example of drone instructions for returning to a drone ground base;
FIG. 7C illustrates and example folder structure for storing back-transformed images;
FIG. 7D is an example of a labeled training image for a predictor of the second system with fire and smoke labels;
FIG. 7E illustrates a timeline for a training step;
FIG. 8A shows a JSON output example for predictions provided by the second computer system;
FIG. 8B shows an example message with additional navigation instructions in JSON format;
FIG. 9A shows three examples of training images for the second system with fire and smoke artefacts;
FIG. 9B shows three examples of training images for the second system with smoke artefacts;
FIG. 9C shows two examples of training images for the second system with fire-or-smoke-like artefacts; and

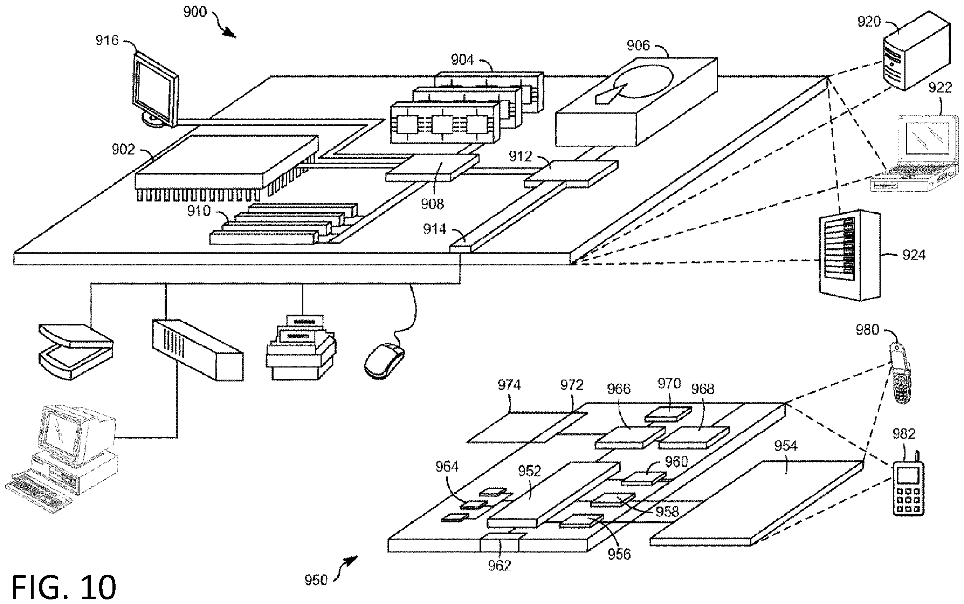

FIG. 10 is a diagram that shows an example of a generic computer device and a generic mobile computer device, which may be used with the techniques described herein, in particular in the context of the first system.

### Detailed Description

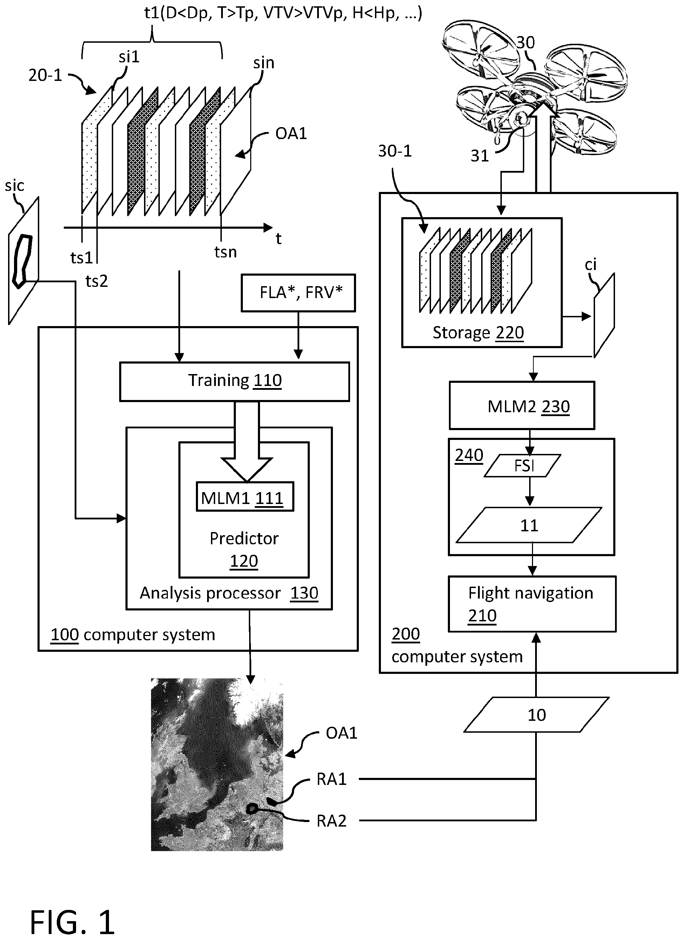

FIG. 1 is a block diagram illustrating a first computer system 100 and a second computer system 200 which are used complementary for the detection of fire outbreaks in reconnaissance missions according to an embodiment.

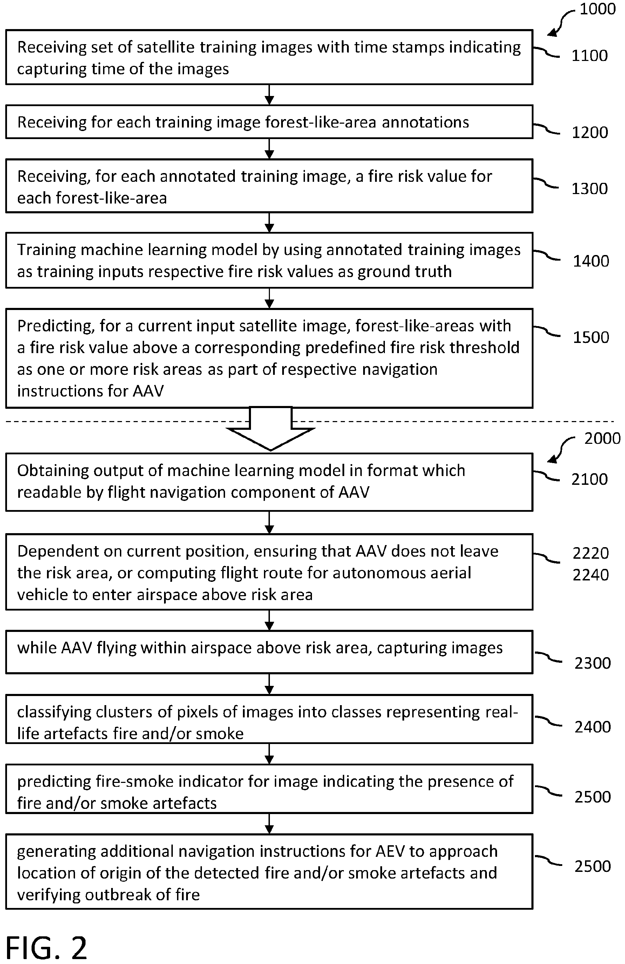

Thereby, the computer system 100 is adapted for training a machine learning model 111 to predict geographic risk areas RA1, RA2 with a forest fire risk. The predicted risk areas are then used as part of navigation instructions 10 for one or more autonomous arial vehicles 30 to observe such risk areas. The second computer system 200 is embedded in an AAV 30 and is adapted to control the AAV 30 to detect an outbreak of fire in a forest-like-area. The first and second computer systems are communicatively coupled such that the first system 100 can transmit data to the second system 200 which is then used by the second system as navigation instructions 10 for AAV 30. The first and second systems are now described in detail with regard to the functions which are implemented by said systems. Both systems comprise respective memory and processing means to load and execute respective computer programs for performing the steps of respective computer-implemented methods. FIG. 2 is a flowchart of two cascaded computer-implemented methods 1000, 2000 which can be complementarily used to detect an outbreak of fire in a forest-like-area. Thereby, method 1000 can be executed by system 100, and method 2000 can be executed by system 200. In the following, FIG. 1 is described in the context of FIG.2. Therefore, reference numbers may refer to any of FIG. 1 and FIG. 2.

A training module 110 of the first system 100 receives 1100 a set 20-1 of satellite training images si1 to sin via an appropriate data interface. Typically, the training images si1 to sin can be accessed in large image databases which are provided, for example, by service providers such as the Copernicus Open Access Hub (accessible at https://scihub.copernicus.eu/). In general, such data sources for training data may be connected to system 100 via so-called connectors which are known in the art to provide entry points for new incoming data from external data sources. Advantageously, the training images comprise thermal images and/or RGB images and/or multispectral images associated with one or more observance areas. Thermal images are most useful for the herein disclosed training method. However, RGB images and multispectral images can further improve the training data. The example images shown in the figures are all RGB images for showing a realistic image. However, in particular thermal training images can show fire artefacts clearer. The training images are captured as time series over a time interval t1 where each training image has a time stamp ts1, ts2, ..., tsn indicating the capturing time of the image. The time interval t1 is long enough to cover at least time periods during which the one or more observance areas OA1 were exposed to one or more conditions which are favorable for outbreak of fire. Such conditions during said observation time periods may, for example, include any of the following, and any combination thereof:
- temperature T raised above a predefined temperature threshold Tp
- distance of a respective observance area to human built infrastructure like streets, hiking trails, etc. is below a predefined distance threshold
- fuel load is above a predefined fuel load threshold
- amount of vulnerable type of vegetation present in a respective observance area is above a predefined vulnerable vegetation threshold (e.g., Normalized Difference Vegetation Index values may be used as a measure for vulnerable vegetation)
- humidity H fell below a predefined humidity threshold Hp.
- steepness S of the terrain prevailing in the respective forest-like-area exceeds a predefined steepness threshold Sp;
- soil permeability P of the soil prevailing in the respective forest-like-area exceeds a predefined permeability threshold Pp.

The training module 110 further receives 1200 for each training image one or more forest-like-area annotations FLA* (the asterisk being used as a placeholder for multiple index values). FLA* annotations indicate, in the respective training image, sub-areas of a respective observance area which are covered by forest-like vegetation.

Further, the training module 110 receives 1300, for each annotated training image, a fire risk value FRV* for each forest-like-area FLA*. The fire risk value indicates a risk for an outbreak of fire in the respective forest-like-area.

Then, a first machine learning model 111 (MLM1) used by a predictor module 120 of system 100 is trained 1400 by the training module 110 using the annotated training images as training inputs to MLM1 111, and by using the respective fire risk values FRV* as ground truth, to predict, for a current input satellite image sic, one or more forest-like-areas with a fire risk value above a corresponding predefined fire risk threshold as one or more risk areas RA1, RA2. Location information characterizing the predicted one or more forest-like-areas becomes part of respective navigation instructions 10 for AAV 30 to direct AAV30 to such forest-like-areas with critical fire risk values. The boundaries of a risk area may be specified by a respective polygon.

In one example implementation, system 100 is registered on the Copernicus Open Access Hub. System 100 may use libraries (e.g., sentinelsat, geopandas, shapely) which support searching, downloading, and handling geometric objects for defining an Area of Interest (AOI). Once system 100 has established a session with the Copernicus Open Access Hub, an AOI and a date range can be provided by system 100 to the Copernicus Open Access Hub to indicate for which observance areas the system would like to receive training data. For example, the AOI may be defined using a GeoJSON object or a Well-Known Text (WKT) geometry.

A GeoJSON example for specifying the Spanish island La Palma as an AOI is:
[[[-18.1646520272,28.3365445401],[-17.5439244881,28.3365445401],[-17.5439244881, 29.0112695169], [-18.1646520272, 29.0112695169],[-18.1646520272,28.3365445401]]]

An example for a date range for the data to be retrieved is:

```
 start_date = '2023-05-04'
 end_date = '2023-07-30'
```

A search for available training datasets based on such criteria is then triggered. Advantageously, the training datasets matching the search criteria are then downloaded to a persistence module of system 100 which may be a submodule of the training module 110. For example, this may be done programmatically via a script (e.g., via Python). The downloaded training datasets are the structured based on the region (AOI, observance areas) and time stamp.

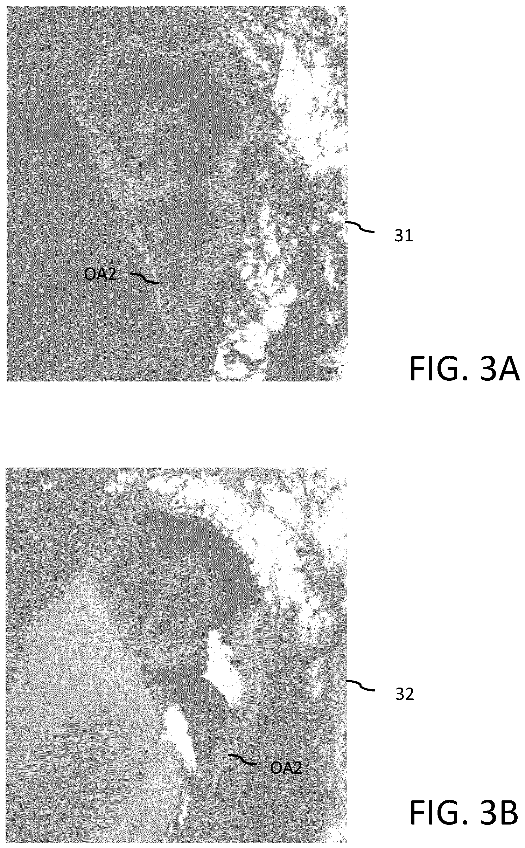

FIGs. 3A, 3B illustrate examples of two downloaded training images. The image 31 of FIG. 3A shows the observance area La Palma OA2 before forest fire. The image 32 of FIG. 3B shows the same observance area OA2 after forest fire. Advantageously, the training dataset is continuously updated by continuously downloading new actual image data each day. Typically, it is sufficient to download one image a day. However, multiple images of the same observance area can be downloaded each day if enough storage capacity is made available.

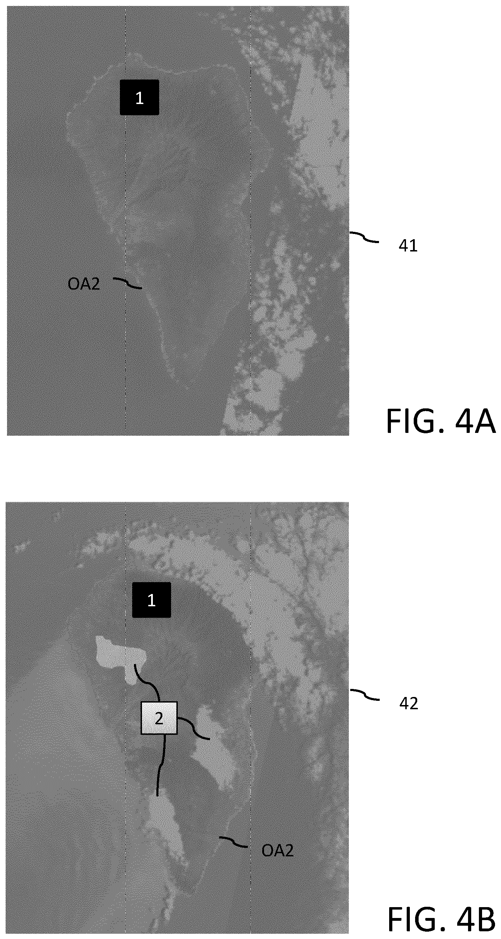

The training module further is used for annotating (labeling) the training data images. Image annotation tools are known in the art. For example, a user may assign a respective classification value to the pixels in a training image. FIG. 4A is a training image 41 showing OA2 captured before forest fire. All forest-like areas are in good condition. Therefore, in the example, the entire image is annotated with label '1' representing the fire-risk-value 'not-burned' for all pixels of the image. The image 42 of FIG. 4B was captured after fires in OA2. The burned areas are highlighted with the annotation tool using a bright color. In the example, label '2' is assigned to the pixels in the highlighted areas to assign the fire-risk-value 'burned' to these pixels. Although the shown example is based on RGB training images, thermal and multi-spectral training images can be processed in the same manner to assign 'non-burned' and 'burned' labels to the pixels of the observance area(s) of each training image. For example, the training images may be in any of the formats: JPG, PNG, SVG, GeoTIFF. Labels may be in the JSON format.

In optional embodiments, each forest-like-area annotation FLA* may further include one or more of the following labels:
- a label for the type of wood prevailing in the respective forest-like-area, and the type of wood has a defined impact on the respective fire risk value;
- a label for soil conditions (e.g., soil permeability) prevailing in the respective forest-like-area, and the soil condition has a defined impact on the respective fire risk value;
- a label for the health status of trees prevailing in the respective forest-like-area, and the health status has a defined impact on the respective fire risk value;
- a label for historic weather data prevailing in the respective forest-like-area, and the historic weather data has a defined impact on the respective fire risk value;
- a label for weather data forecasts prevailing in the respective forest-like-area, and the weather data forecasts has a defined impact on the respective fire risk value;
- a label for topography conditions (e.g., steepness of the terrain) prevailing in the respective forest-like-area, wherein the topography condition has a defined impact on the respective fire risk value;
- a label for fuel load prevailing in the respective forest-like-area, wherein the fuel load has a defined impact on the respective fire risk value.

For training MLM1 with the annotated training images, it can be advantageous to start with a pre-trained machine-learning model (e.g., Detection Transformer Resnet50 Panoptic) which can be imported from a model library provided by platforms such as Hugging Face (cf. https://huggingface.co/models). When running the training process 1400, the training module provides the training datasets 20-1 with the annotations FLA* and labels (ground truth FRV*), initializes the (pre-trained) MLM1 model, and adjusts model configuration so it fits to a particular use case (in the example, it changes fire-risk-values (classes) to 'burned' and 'not-burned' in configuration of the MLM1 model). If needed, the model architecture can be adjusted (e.g., more layers, more neurons). The hyperparameters are set. In the example the following hyperparameters were used: epochs: 100, optimizer: Adam, loss: cross-entropy loss, learning rate: 1e-4, batch size: 4, dropout: 0.15. Finally, training is run with the training dataset 20-1. The model is validated with a validation dataset by using appropriate metrics (in the example the used metrics include: precision, recall, F1 score).

Training is configured such that, for a given training step, datasets and labels are available for the corresponding time stamps. For example, when generating a training dataset entry once a day, a data entry may be available with a timestamp t0, and further data entries may be available with timestamps t1 and t2, wherein, for example, t1 is one day ahead of t0, and t2 is two days ahead t0. That is, t1 and t2 are past timestamps given the training start timestamp. The time series can be arbitrary long t0 - tn. For this reason, MML1 obtains a predictive power so that a current dataset entry (i.e., a current image of one or more forest-like areas) can be used as test input for MML1 111 to predict 1500 future states with regard to fire risk value for the respective area(s).

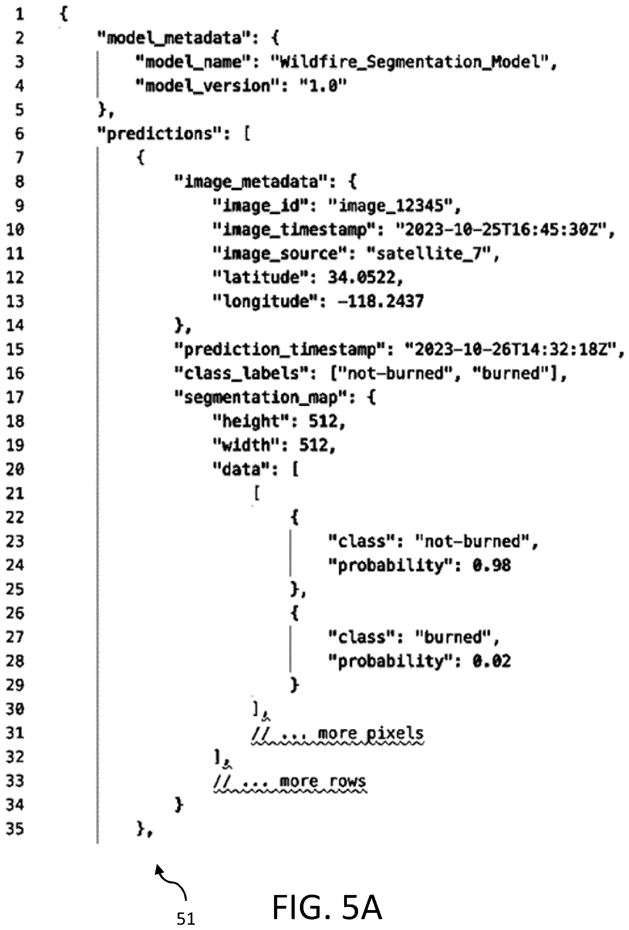

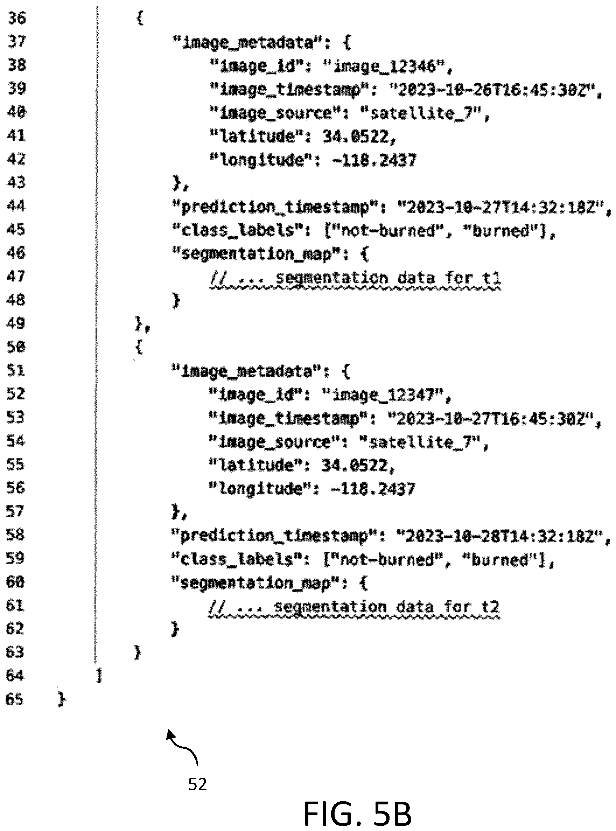

The predictions (output of MML1 in response to a current test input) may be provided in JSON format. FIGs. 5A, 5B illustrate a JSON output example 51, 52:
- **model_metadata** contains information about the model MML1 itself, including its name and version.
- **image_metadata** contains information about the image (current test input) being analyzed, including its unique identifier, timestamp, source, latitude and longitude field to store the geographical coordinates of the image.
- **predictions** is an array, with each element representing predictions for a specific image at a particular timestamp:
   ∘ Each element in the predictions array contains **image_metadata, prediction_timestamp, class_labels,** and **segmentation_map.** The **image_metadata** and **prediction_timestamp** allow understanding the temporal context of each prediction.
   ∘ **image_metadata** and **prediction_timestamp** ensure that the prediction is associated with the correct image and the time the prediction was made.
   ∘ **class_labels** and **segmentation_map** provide classification and probability information for each pixel in the image.

The predictions may then be saved to a persistence layer as a JSON batch file. For example, the files may be structured by date as in the following example: 2023-10-26_computer-system-100_predictions.json.

Predictions may be provided predict by the predictor multiple times per day. For example, prediction may be computed at regular time intervals covering a range from some minutes up to some hours (e.g., from every 15 min up to only twice a day). For example, each prediction file pixel entry in the JSON file is analyzed with regard to probability scores for the class (fire risk value) "burned" greater than a corresponding predefined fire risk threshold (e.g., 0.9).

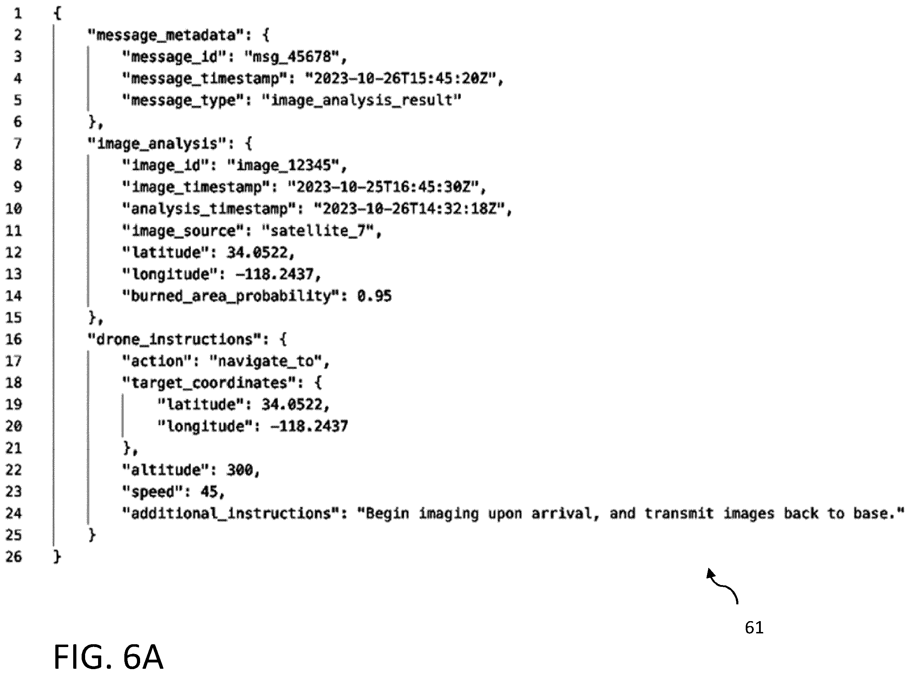

If a cluster of n adjacent pixels has a probability score of greater than this threshold, a machine-readable message 10 is be sent to drone 30. Assuming n = 4 and the fire risk threshold = 0.9, FIG. 6A shows and example message 61 in JSON format:
- **message_metadata:** Contains metadata about the message itself, including a unique message ID, the timestamp when the message was created, and the type of message being sent.
- **image_analysis:** Contains information about the image that was analyzed, the timestamp of the image and the analysis, the source of the image, and the geographical coordinates of the detected burned area along with the probability indicating the presence of a burned area.
- **drone_instructions:** Contains navigation instructions 10 for the drone on how to react to the image analysis results. In this example, it is instructed to navigate to the specified coordinates, with additional details such as the desired altitude, speed, and any additional instructions for actions to be performed upon arrival.

The message is sent via a computer interface (not shown) from the runtime environment of an analysis processor 130 of computer system 100 to computer system 200 of the drone 30. The analysis processor can be seen as the runtime environment for the predictor 120. Messages generated by system 100 may be transferred from the runtime environment of system 100 to the drone within a given radius by using radio signals. Radio signals can be mobile radio signals like 4G & 5G signals or other signal formats, so that the radio signals can reach the AAV. The messages may thereby be encrypted with AES256 or DES56 standard.

Turning now to the description of drone 30 and its functions which are performed as computer-implemented method 2000 in response to messages received from system 100 for controlling the AAV (drone) 30 to detect an outbreak of fire in a forest-like-area. The drone 30 carries mobile computer system 200 which is adapted to receive such messages while flying or while being in a landed position. System 100 is active and waiting for instructions. In other words, system 200 obtains 2100 the output 10 of MLM1 111 which is based on a current satellite image sic including pixels representing a respective forest-like-area. As described in the context of system 100, the output 10 is the result of a prediction that the forest-like-area is a risk area RA1, RA2 with a fire risk value above the predefined fire risk threshold. As shown in example 61 of FIG. 6A, the output further indicates the boundaries of the risk area in a format which is readable by a flight navigation component 210 of the drone 30.

If the instructions 10 instruct the drone to "navigate to" a certain latitude and longitude coordinate, a flight navigation component 210 of system 200 can adjust the current AAV status mode to either (a) "change route" based on coordinates provided by the instructions, 10 or (b) "start fly mode and take off".

If flying, the flight navigation component 210 processes the respective message received from system 200 and - if necessary - adjusts the flight route by processing respective internal commands. Internal commands may be in a JSON format to be processed by an onboard runtime environment of system 200.

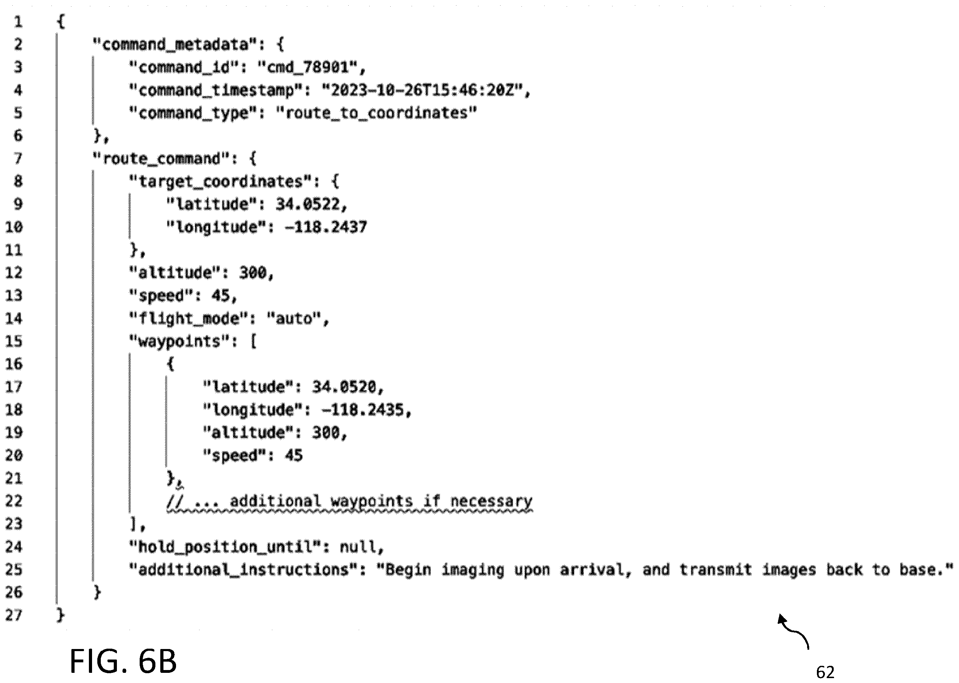

An example 62 of such internal commands in JSON format is given in FIG. 6B:
- **command_metadata:** Contains metadata about the command, including a unique command ID, the timestamp when the command was created, and the type of command being issued.
- **route_command:** Contains the actual command details for routing the drone to the specified coordinates:
   ∘ **target_coordinates:** The destination latitude and longitude coordinates received from the previous message.
   ∘ **altitude and speed:** The desired altitude and speed for the drone while en route to the target.
   ∘ **flight_mode:** Indicates that the drone should operate in autonomous ("auto") mode for this routing command.
   ∘ **waypoints:** An array of waypoints, if necessary, to guide the drone's path to the target coordinates. Each waypoint contains latitude, longitude, altitude, and speed values.
   ∘ **hold_position_until:** A field that could be used to specify a time until which the drone should hold its position upon arrival. A value of null indicates no hold is required.
   ∘ **additional_instructions:** Any further instructions for the drone, such as actions to be performed upon arrival at the target coordinates.

In case the current position of the drone 30 is within the airspace above the risk area RA1, RA2, the flight navigation component 210 ensures 2220 that the drone does not leave the risk area. For example, the drone may circle around the given coordinates until further instructions arrives. Thereby, the circling radius for a helicopter like drone can be much smaller than for a plane like drone. In case the current position of the autonomous aerial vehicle is in an airspace outside the risk area, the flight navigation component 210 computes 2240 a flight route for the autonomous aerial vehicle to enter the airspace above the risk area. Route computation for aerial vehicles based on destination coordinates and the vehicles current position is known in the art of aerial navigation. The current position thereby is determined by standard location sensors (e.g., GPS sensors) and sensors measuring the flight altitude.

Thereby, the drone 30 monitors the ground area with regard to fire and smoke indicators. It uses onboard sensors like RGB cameras, thermal cameras and/or multispectral cameras to generate images from the ground. In other words, while the AAV is flying within the airspace above the respective risk area RA1, RA2, it captures 2300 images 30-1 comprising thermal images and/or RGB images and/or multispectral images with one or more respective onboard image capturing devices 31 at a framerate of multiple frames per second. The captured images 30-1 are stored 2320 in a storage component 220 of the AAV 30. The stored images are then analyzed by using an onboard machine learning model 230. Thereby, the images can be taken to show different perspectives. For example, panoramic images may be captured but also vertical imagery capturing the ground underneath the AAV can be used.

The onboard machine learning model MLM2 230 has been trained with training images of forest-like-areas including training images including fire and/or smoke artefacts, and training images including fire-or-smoke-like -like artefacts, as well as training images without such artefacts. Each training image is labeled with a fire-smoke indicator as ground truth. The fire-smoke indicator characterizes the training image with regard to the presence of fire and/or smoke. The trained MLM2 230 classifies 2400 clusters of pixels of each stored image (ci), into respective classes A1, A2 representing real-life artefacts fire and/or smoke. Finally, a fire-smoke indicator FSI is predicted 2500 for a stored image ci. In case the fire-smoke indicator FSI indicates the presence of fire and/or smoke artefacts, additional navigation instructions 11 are generated 2600 for the AAV 30 to approach the airspace above the location of origin of the detected fire and/or smoke artefacts to verify whether the fire and/or smoke artefacts are caused by an outbreak of fire.

For the training of MLM2 230, libraries such as pytorch, opencv, or numpy may be used for processing image data. A development environment may be created with respective installed packages, which may be used for Visual Studio Code for the training of computer system 200.

In a pre-training phase, the AAV 30 collects data by circling around given coordinates until further instructions arrive. Thereby, the drone monitors the ground area and generates image and/or video data using its onboard sensors (e.g., RGB cameras, thermal cameras and/or multispectral cameras) to generate images from the ground. The images and videos are stored on the intermediate storage device 220 on the drone. The onboard sensors may be connected to the intermediate storage device via a processor and cable. The images and videos may be stored in a folder structure on the intermediate storage device. The folder structures may use a hierarchy for storing the images by year/month/day/images and/or year/month/day/videos.

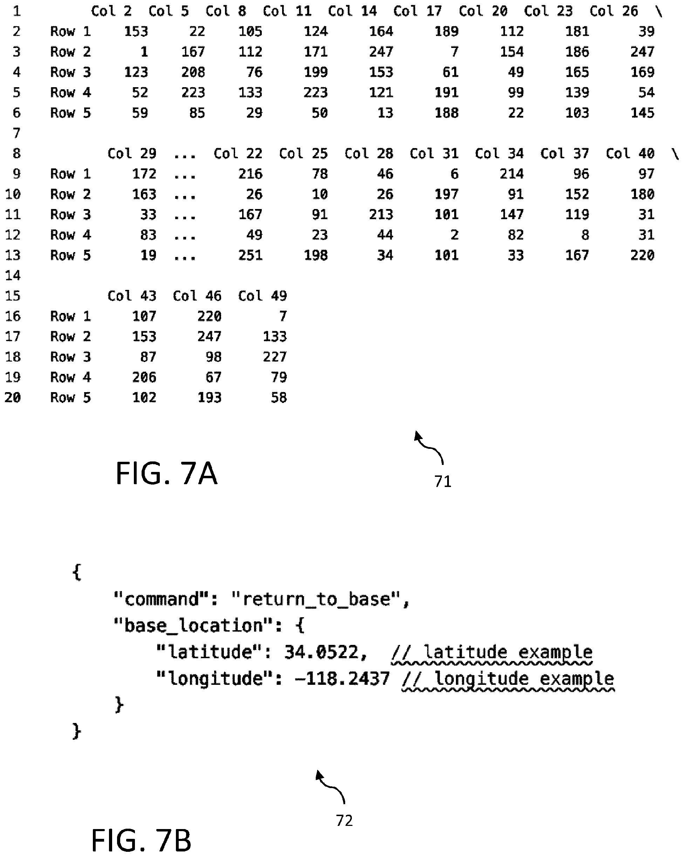

In one implementation, the drone may send the images/videos via a communication module from the intermediate storage device 220 to a training data platform. To do so, the drone can transform an image file to a machine-readable format, e.g. an array of arrays representing each pixel with brightness and given color channels. In a simple grayscale image, each pixel can be represented by a single value, typically ranging from 0 (black) to 255 (white). For a color image, each pixel is usually represented by a set of three values corresponding to the red, green, and blue (RGB) components, each ranging from 0 to 255. FIG. 7A illustrates an example of a transformed image file 71. Videos can be interpreted as a series of images where the above process may be applied as well.

The drone can operate and generate/collect images/videos until it receives a signal with instructions to return to a drone ground base. Such a machine-readable signal is received by a communication module onboard. An example of such instructions 72 is shown in FIG. 7B.

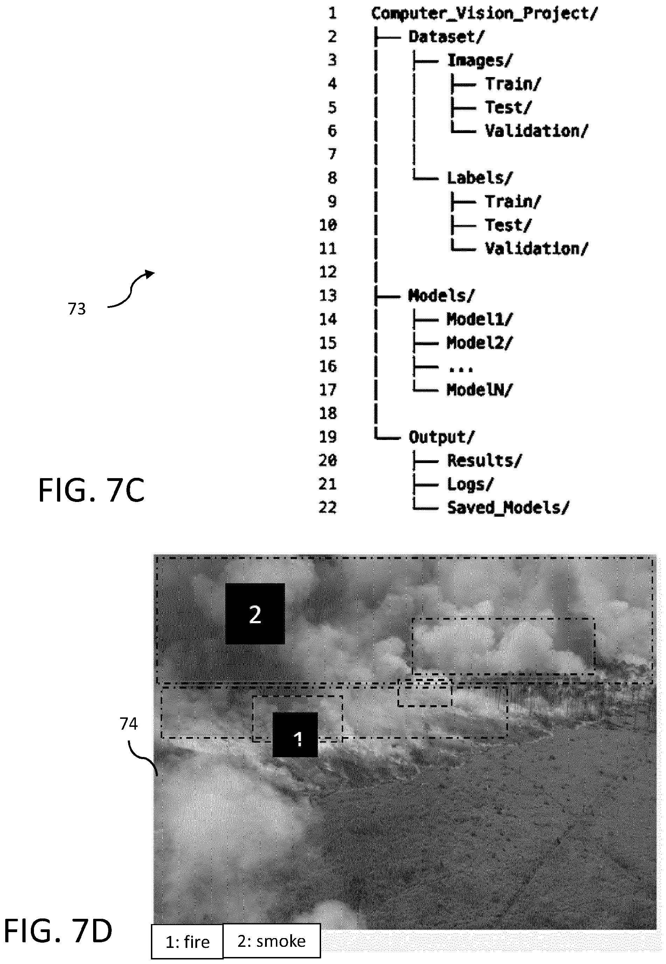

In a further pre-training step, the collected images can be downloaded from the training data platform to a training phase operating system of system 200 focusing on training an AI model. Then, the size of the data corpus for training is selected. For example, a start and end date may be selected to define a time interval for retrieving all training images collected during said time interval. The machine-readable representation of the selected images in the training data corpus is transformed back to respective image files (by using a reverse process with regard to the onboard transformation process). The back-transformed images are stored on respective storage means of the operating system. For example, a corresponding folder structure can look like the example 73 shown in FIG. 7C.

The back-transformed images are then labeled one by one based on the classes needed. In the example shown in FIG. 7D, two classes: (1) fire, (2) smoke are used for labeling a training image 74 which has been collected over a forest-like area on fire. The image shows fire artefacts labeled with '1' and smoke artefacts labeled with '2'. Image sections with fire artefacts ('1') are labeled using dashed rectangles as annotations. Image sections with smoke artefacts ('2') are labeled using dash-dotted rectangles as annotations. A skilled person is aware that labeling can be performed manually or in a semi-automated or fully automated manner. In particular when using semi-automated or fully automated labeling, it can be advantageous to check whether the labeling is correct before the labeled data sets are finally exported from the labeling tool to the storage means of the operating system in accordance with the above folder structure (cf. FIG. 7C).

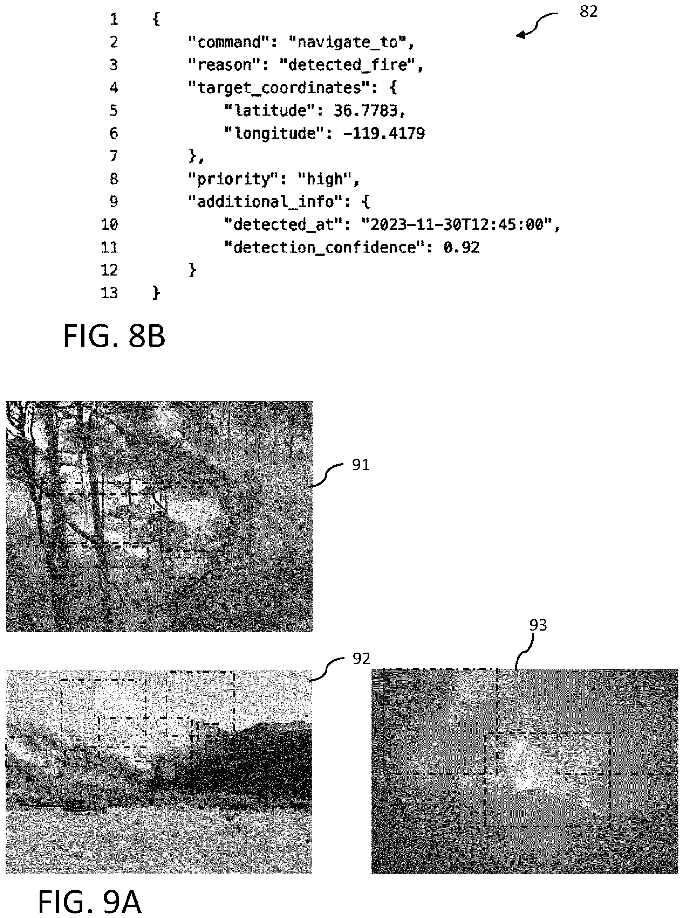

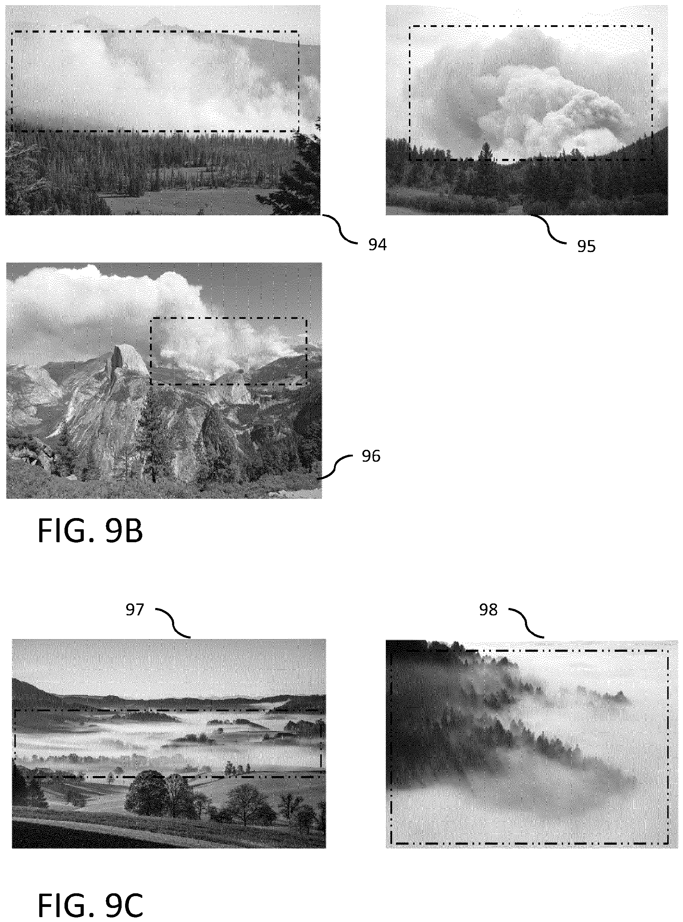

FIGs. 9A to 9C show further examples of training images for MLM2 230. The three images 91 to 93 in FIG. 9A include fire artefacts (annotated by dashed rectangles) and smoke artefacts (annotated by dash-dotted rectangles). The three images 94 to 96 of FIG. 9B include only smoke artefacts (dash-dotted annotation). The two images 97, 98 of FIG. 9C only include fire-or-smoke-like artefacts (clouds, fog) in the indicated rectangles (dash-double dotted). For these images, the ground truth values for fire probability and smoke probability are both zero. This type of training images is important to allow the MLM2 to distinguish real fire and smoke artefacts from fire-or-smoke-like artefacts. Although the example images are primarily panoramic images, it is to be noted that the training images can also include images which are captured by the drone in the vertical direction to the ground (vertical imagery).

Finally, the labeled datasets are used to train the onboard predictive machine learning model MLM2. The labeled dataset (back-transformed images with labels) may be in JPG, PNG, SVG, or GeoTIFF formats with labels usually being in JSON format. If possible, the labeled datasets are imported from the training data platform including the labels into the memory of system 200. If this is not possible, images and labels may be loaded as chunks into the memory.

A pre-trained AI model may be imported from the Internet. Typically, such pretrained models are available under MIT or Apache 2.0 licenses. An example is the Detection Transformer ResNet-50. The imported labeled dataset is then split into training, validation and test dataset, for example, at the ration 70-10-20. The selection is thereby random over all labeled datasets.

For running the training process, datasets and labels are provided via the memory. The pre-trained model initialized. The model configuration is adjusted to match the use case (e.g., change classes to "fire" and "smoke" in configuration of model). If needed, the model architecture/topology may adjust be (e.g., more layers, more neurons). Then, the hyperparameters are set (e.g., epochs: 100, optimizer: Adam, loss: cross-entropy loss, learning rate: 1e-4, batch size: 4, dropout: 0.15). The training is then run with the training dataset. The trained model is validated using the validation dataset. Appropriate metrics is used for the validation (e.g., precision, recall, F1 score).

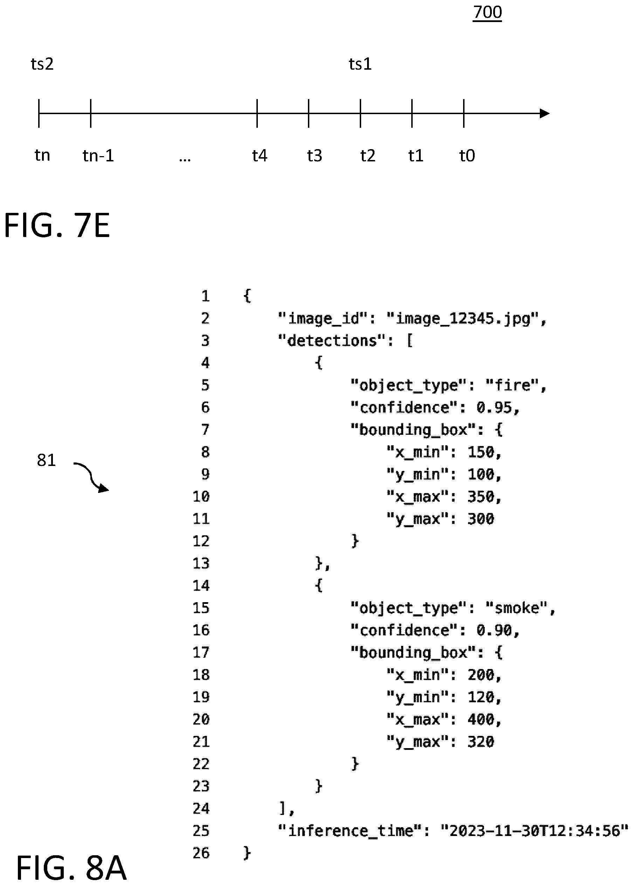

The training is configured so that for a given training step 700 (cf. FIG. 7E), datasets and labels for timestamp t0 (t0 = timestamp in the past where a dataset entry was generated) as well as t1 and t2 are available. Thereby, t1 is one day ahead of t0, and t2 is two days ahead t0. In a first example of FIG. 7E, t1 and t2 are past timestamps given the training start timestamp ts1. However, the time series for the training data can be arbitrary long. For example, it may comprise the timestamps t0 - tn with tn being the training start time stamp ts2. For this reason, a predictive property is built into the trained model MLM2 where a current dataset entry (a just captured image) is used as test input to predict future states of the observed forest-like area with regard to the detection of smoke and/or fire artefacts in the current test input. The trained model checkpoints and evaluation results given as JSON format may be exported to a persistence module of the training data platform via an appropriate interface. In one implementation, the training data sets may also include images with fire-or-smoke-like -like artefacts that include artefacts associated with fog and clouds. Using such additional training images can improve the prediction accuracy for detecting smoke in an image because the machine learning model MLM2 learns to better distinguish real smoke events from smoke like events (fog and clouds).

After the model MLM2 has been trained, it is deployed to system 200 of the AAV 30 which includes hardware components supporting artificial intelligence processing modules. For example, for making predictions with a machine learning model based on a neural network, a graphics processing unit (GPU) can be advantageous. Advantageously, the model deployment is performed inside the drone ground base by an operator.

The AAV can depart for monitoring the target area specified by the navigation instructions 10 received from system 100. While the drone is flying over the specified area, it captures images or videos as series of images of the ground underneath. For making an inference, the trained model MLM2 is initialized and the image stream capture by the AAV is used as an input to MLM2 230 to make predictions with regard to each test input image with regard to a smoke and/or fire artefact is detected on the input image. The outputs of MLM2 are such predictions which may be generated in JSON format as shown in the example 81 of FIG. 8A:
- **image_id:** the identifier of the image processed by the model.
- **detections:** an array of detected objects.
   ∘ Each object contains:
      ▪ **object_type:** type of the object detected (e.g., "fire" or "smoke").
      ▪ **confidence:** a confidence score (between 0 and 1) indicating the model's confidence in the detection.
      ▪ **bounding_box:** the coordinates of a bounding box around the detected object, typically given by minimum and maximum X and Y coordinates.
- **inference_time:** The timestamp when the inference was made.

The predictions may be saved to a persistence layer of a respective data platform as a JSON batch file by using a respective interface between the inference runtime of the drone and the persistence layer of the data platform. For example, files may be structured by date: 2023-10-26 computer-system-200_predictions.json.

Prediction files may be continuously loaded from the AAV persistence module into memory. Each prediction file is then analyzed with regard to probability scores for class "fire" and/or "smoke" artefacts greater than a predefined threshold (e.g., 0.9) indicating the presence of fire and/or smoke. If a fire and/or smoke artefact has a probability score greater than the predefined threshold (i.e., a fire-smoke indicator FSI is detected), the drone starts to navigate towards the object artefact with the highest probability score based on additional navigation instructions 11 generated 2600 based on the location of the detected object artefacts. FIG. 8B shows an example message 82 with additional navigation instructions 11 in JSON format with a **navigate_to** command specifying the new **target_coordinates** for the AAV. The message 82 is sent via a computer interface from the inference environment of the analysis processor 240 to the navigation module210 of the drone 30. It may use internal software interfaces to transfer the messages (e.g., RESTful API).

The navigation module 210 of the drone receives the message 82 and adjusts the GPS-tracked route based on the target coordinates specified in the message. The drone flies towards the airspace above the target coordinates using an internal GPS module of the drone. The drone may then circle around the given target coordinates until further instructions arrive. Thereby, the drone monitors the ground area underneath with regard to fire and smoke events. It uses its onboard sensors for continuously generating images from the ground and analyses such images continuously to verify whether the fire and/or smoke artefacts are caused by an outbreak of fire. It is to be noted that different drone types (plane like drones, helicopter like drones) can fly in different ways to observe the ground. For example, plane like drones typically fly at higher altitudes above the ground and at higher speed than helicopter like drones (which can even stand still in the air). For example, if a drone detects fire-smoke-like artefacts in the vertical direction underneath the drone, a helicopter like drone can simply stay at this location and perhaps reduce its altitude to have a closer look at the respective location. On the other hand, a plane like drone flying at a higher speed has quickly passed the region of interest and would need to turn around to further investigate the respective location. The plane like drone may then fly around said location in circles while a helicopter like drone may simply keep its position in the air.

The drone can send events messages based on the inference of the images to a respective alert data platform (e.g., a central aerial vehicle communication platform). For example, the AAV may communicate the location of origin of detected fire and/or smoke artefacts to the central aerial vehicle communication platform as a first alert of a potential outbreak of fire when a stored image is classified into a class representing real-life artefacts fire and/or smoke. A second alert may be communicated to said platform in case of a confirmed outbreak of fire after verification that the fire and/or smoke artefacts are caused by an outbreak of fire. If the drone identifies an event (i.e., confirms the detection of fire and/or smoke), it continues to circle around the event until further operation requests may arrive from the alert data platform. If the drone does not identify any event, it may fly back to its earlier position and continue with the pre-defined route over the forest-like regions.

In embodiments where multiple drones are used to observe a larger area, the AAV may communicate the location of origin of the detected fire and/or smoke artefacts to one or more further AAVs with instructions to observe the location of origin from one or more additional perspectives. For example, plane like drones may be used to scan larger observation areas in shorter times than helicopter like planes. When they detect a fire and/or smoke artefacts, they may instruct helicopter like drones to fly to the respective location for further investigation.

Once the route is completed, the drone may fly back to the drone ground base and land (e.g., for recharging or other services such as for example a training update of MLM2).

FIG. 9 is a diagram that shows an example of a generic computer device 900 and a generic mobile computer device 950, which may be used with the techniques described here. In some embodiments, computing device 900 may relate to system 100 (cf. FIG. 1). Computing device 950 is intended to represent various forms of mobile devices, such as personal digital assistants, cellular telephones, smart phones, and other similar computing devices. In the context of this disclosure the computing device 950 may provide I/O means for a user to interact with the computing device 900 (e.g., for displaying the provided preview images to a user). The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low-speed interface 912 connecting to low-speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high-speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high-speed controller 908 manages bandwidth-intensive operations for the computing device 900, while the low-speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

## Claims

1. A computer-implemented method (1000) for training a machine learning model (111) to predict geographic risk areas (RA1, RA2) with a forest fire risk, the predicted risk areas to be used as part of navigation instructions (10) for one or more autonomous arial vehicles (30) to observe such risk areas, comprising:
receiving (1100) a set (20-1) of satellite training images (si1 to sin) with thermal images and/or RGB images and/or multispectral images associated with one or more observance areas captured as time series over a time interval (t1), the time interval covering at least time periods where the one or more observance areas (OA1) were exposed to temperatures (T) above a predefined temperature threshold (Tp), and/or have a distance from human built infrastructure below a predefined distance threshold, and/or contain fuel load above a predefined fuel load threshold, and/or show an amount of vulnerable type of vegetation above a predefined vulnerable vegetation threshold, and/or were exposed to a humidity (H) below a predefined humidity threshold (Hp), and/or are associated with a terrain having a steepness exceeding a predefined steepness threshold, and/or show a soil permeability exceeding a predefined permeability threshold, each training image having a time stamp (ts1, ts2, ..., tsn) indicating the capturing time of the image;
receiving (1200) for each training image one or more forest-like-area annotations (FLA*) indicating, in the respective training image, areas which are covered by forest-like vegetation;
receiving (1300), for each annotated training image, a fire risk value (FRV*) for each forest-like-area (FLA*), the fire risk value indicating a risk for an outbreak of fire in the respective forest-like-area;
training (1400) the machine learning model (111) by using the annotated training images as training inputs to the machine learning model, and by using the respective fire risk values (FRV*) as ground truth, to predict, for a current input satellite image (sic), one or more forest-like-areas with a fire risk value above a corresponding predefined fire risk threshold as one or more risk areas (RA1, RA2) as part of respective navigation instructions (10).

2. The method of claim 1, wherein each forest-like-area annotation (FLA*) further includes a label for the type of wood prevailing during the time interval in the respective forest-like-area, and the type of wood has a defined impact on the respective fire risk value.

3. The method of claim 1 or 2, wherein each forest-like-area annotation (FLA*) further includes a label for soil conditions prevailing during the time interval in the respective forest-like-area, and the soil condition has a defined impact on the respective fire risk value.

4. The method of any of the claims 1 to 3, wherein each forest-like-area annotation (FLA*) further includes a label for the health status of trees prevailing during the time interval in the respective forest-like-area, and the health status has a defined impact on the respective fire risk value.

5. The method of any of the claims 1 to 4, wherein each forest-like-area annotation (FLA*) further includes a label for historic weather data prevailing during the time interval in the respective forest-like-area, and the historic weather data has a defined impact on the respective fire risk value.

6. The method of any of the claims 1 to 5, wherein each forest-like-area annotation (FLA*) further includes a label for weather data forecasts prevailing during the time interval in the respective forest-like-area, and the weather data forecasts has a defined impact on the respective fire risk value.

7. A computer program product comprising computer-readable instructions that, when loaded into the memory of a computing device and processed by one or more processors of the computing device, cause the computing device to execute steps for training a machine learning model (111) to predict geographic risk areas (RA1, RA2) with a forest fire risk in accordance with the method steps of any of the previous claims, the predicted risk areas forming part of navigation instructions for one or more autonomous arial vehicles to observe such risk areas.

8. A computer system (100) for training a machine learning model (111) to predict geographic risk areas (RA1, RA2) with a forest fire risk, the predicted risk areas to be used as part of navigation instructions (10) for one or more autonomous arial vehicles (30) to observe such risk areas, and one or more processors of the computer system for executing computer-readable instructions to instantiate functional modules for performing the steps according to the method of any of the claims 1 to 7.

9. A computer-implemented method (2000) for controlling an autonomous aerial vehicle (30) to detect an outbreak of fire in a forest-like-area, comprising:
obtaining (2100) an output (10) of a machine learning model (111), based on a current satellite image (sic) which includes pixels representing the forest-like-area, wherein the output (10) is the result of a prediction that the forest-like-area is a risk area (RA1, RA2) with a fire risk value above a predefined fire risk threshold, the output further indicating the boundaries of the risk area in a format which is readable by a flight navigation component (210) of the autonomous aerial vehicle (30);
in case the current position of the autonomous aerial vehicle (30) is within an airspace above the risk area (RA1, RA2), the flight navigation component (210) ensuring (2220) that the autonomous aerial vehicle does not leave the risk area, and in case the current position of the autonomous aerial vehicle is in an airspace outside the risk area, the flight navigation component computing (2240) a flight route for the autonomous aerial vehicle to enter the airspace above the risk area;
while the autonomous aerial vehicle is flying (30) within the airspace above the risk area (RA1, RA2), capturing (2300) images 30-1 comprising thermal images and/or RGB images and/or multispectral images with an onboard image capturing device (31) at a framerate of multiple frames per second, and storing (2320) the captured images 30-1 in a storage component (220) of the autonomous aerial vehicle (30);
classifying (2400), by using an onboard machine learning model (230), clusters of pixels of each stored image (ci), into classes (A1, A2) representing real-life artefacts fire and/or smoke, wherein the onboard machine learning model (230) has been trained with training images of forest-like-areas including training images without such artefacts, training images including fire and/or smoke artefacts, and training images including fire-or-smoke-like -like artefacts, with each training image being labeled with a fire-smoke indicator as ground truth, the fire-smoke indicator characterizing the training image with regard to the presence of fire and/or smoke;
predicting (2500) a fire-smoke indicator (FSI) for a stored image (ci), and in case the fire-smoke indicator (FSI) indicates the presence of fire and/or smoke artefacts, generating (2600) additional navigation instructions (11) for the autonomous aerial vehicle (30) to approach the airspace above the location of origin of the detected fire and/or smoke artefacts to obtain additional data for verifying whether the fire and/or smoke artefacts are caused by an outbreak of fire.

10. The method of claim 9, wherein the fire-or-smoke-like artefacts include artefacts associated with fog and/or clouds.

11. The method of claim 9 or 10, wherein the autonomous aerial vehicle communicates the location of origin of the detected fire and/or smoke artefacts to one or more further autonomous aerial vehicles with instructions to observe the location of origin from one or more additional perspectives.

12. The method of any of the claims 9 to 11, wherein the boundaries of the risk area are specified by a respective polygon.

13. The method of any of the claims 9 to 12, wherein the autonomous aerial vehicle communicates the location of origin of the detected fire and/or smoke artefacts to a central aerial vehicle communication platform as a first alert of a potential outbreak of fire when a stored image is classified into a class representing real-life artefacts fire and/or smoke, and wherein the autonomous aerial vehicle communicates the location of origin of the detected fire and/or smoke artefacts to the central aerial vehicle communication platform as a second alert of a confirmed outbreak of fire after verification that the fire and/or smoke artefacts are caused by an outbreak of fire.

14. A computer program product comprising computer-readable instructions that, when loaded into the memory of a computing device and processed by one or more processors of the computing device, cause the computing device to control an autonomous aerial vehicle to detect an outbreak of fire in a forest-like-area according to the method of any of the claims 9 to 13.

15. An autonomous aerial vehicle comprising a computer system for controlling the autonomous aerial vehicle to detect an outbreak of fire in a forest-like-area, the computer system using one or more processors for executing computer-readable instructions to instantiate functional modules for performing the steps according to the method of any of the claims 9 to 13.
